Europäisches Patentamt

European Patent Office

Office européen des brevets

(19)

(11) Veröffentlichungsnummer: **0 103 672**
**A1**

(12) **EUROPÄISCHE PATENTANMELDUNG**

(21) Anmeldenummer: **83104246.0**

(22) Anmeldetag: **30.04.83**

(51) Int. Cl.³: **B 65 G 13/071**

(30) Priorität: **21.09.82 GB 8226830**

(43) Veröffentlichungstag der Anmeldung:
**28.03.84 Patentblatt 84/13**

(84) Benannte Vertragsstaaten:
**AT BE CH DE FR GB IT LI LU NL SE**

(71) Anmelder: **Johann A. Krause UK Limited
Kings Grove Boyn Valley Road
Maidenhead Berks(GB)**

(72) Erfinder: **Hotston, Trevor James
33 Kersey Drive
Selsdon Surrey(GB)**

(72) Erfinder: **Krause, Johann A.
Betonstrasse 31
D-2820 Bremen-Farge(DE)**

(74) Vertreter: **Bolte, Erich, Dipl.-Ing. et al,
c/o Meissner & Bolte Patentanwälte Hollerallee 73
D-2800 Bremen(DE)**

(54) **Friktionsrollenbahn.**

(57) Die Friktionsrollenbahn besitzt eine Mehrzahl von jeweils auf Wellen (4) oder Wellenzapfen (6) gelagerten Friktionsrollen. Diese bestehen aus einer drehfest auf der Welle (4) gelagerten Gleitbuchse (12) und einem gleitend auf der Gleitbuchse (12) gelagerten Laufring (16). Gleitbuchse (12) und Laufring (16) weisen einander zugeordnete Axialflächen auf, so daß bei in axialer Richtung auf den Laufring (16) wirkenden Kräften zusätzliche Friktionskräfte in Drehrichtung des Laufringes (16) wirksam werden. Diese Axialflächen werden nach einer Variante durch einen radial hervorstehenden Bund (13) an einer Seite der Gleitbuchse (12) und durch einen ringförmigen Deckel (14) auf der anderen Seite gebildet, wobei dieser Deckel (14) drehfest mit der Welle (4) verbunden ist. Der Bund (13) und die Endfläche des Deckels (14) wirken mit gegenüberliegenden Flächen des Laufrings (16) zusammen.

*Fig. 2*

EP 0 103 672 A1

Croydon Printing Company Ltd.

Meissner & Bolte, Hollerallee 73, D-2800 Bremen 1

Hans Meissner · Dipl.-Ing. (bis 1980)*
Erich Bolte · Dipl.-Ing.*
Ralf M. Kern · Dipl.-Ing.**
Dr. Eugen Popp · Dipl.-Ing., Dipl.-Wirtsch.-Ing.**
Wolf E. Sajda · Dipl.-Phys.**
Dr. Tam v. Bülow · Dipl.-Ing., Dipl.-Wirtsch.-Ing.**

BÜRO/OFFICE BREMEN
Hollerallee 73
D-2800 Bremen 1

Telefon: (04 21) 34 20 19
Telegramme: PATMEIS BREMEN
Telex: 246 157 meibo d

Anmelder:

Johann A. Krause UK Limited
Kings Grove
Boyn Valley Road
Maidenhead Berks
England

| Ihr Zeichen<br>Your ref. | Ihr Schreiben vom<br>Your letter of | Unser Zeichen<br>Our ref. | Datum<br>Date |
|---|---|---|---|
| | | KRS-27-EP | 25. April 1983/9118 |

Friktionsrollenbahn

Priorität:  Großbritannien 21. Sept.1982
82 26 830

Beschreibung

Die Erfindung betrifft eine Friktionsrollenbahn mit einer
Mehrzahl von jeweils auf Wellen oder Wellenzapfen gelagerten Friktionsrollen, die jeweils aus einer drehfest auf
der Welle bzw. dem Wellenzapfen gelagerten Gleitbuchse
und einem gleitend auf der Gleitbuchse gelagerten Laufring
bestehen.

Eine solche Friktionsrollenbahn ist aus der DE-A-30 17 942
bekannt. Friktionsrollenbahnen werden vornehmlich in Fertigungsbetrieben zum Transport einzelner Gegenstände eingesetzt. Vor allem finden derartige Fördersysteme in der Automobilfertigung Einsatz. Sie dienen zum Transport von Werkstückträgern, Paletten od. dgl., auf denen zu bearbeitende Werkstücke, z. B. Motoren, Getriebe etc. montiert sind.

Die Friktionsrollenbahnen bestehen üblicherweise aus seitlichen Tragschienen, sich zwischen diesen in Querrichtung erstreckenden Wellen sowie auf diesen angeordneten Friktionsrollen. Die zu fördernden Gegenstände liegen auf den jeweils seitlich gelagerten Friktionsrollen auf. Durch Antrieb der Wellen bzw. Wellenzapfen wird über Reibungsmitnahme der betreffende Gegenstand durch die Friktionsrollen transportiert. Bei der Friktionsrollenbahn der DE-A-30 17 942 wird die Gleitbuchse mit der Welle gedreht und nimmt ihrerseits über eine reibschlüssige Verbindung den Laufring mit. Die drehfeste Verbindung zwischen Welle und Gleitbuchse erfolgt dort über eine Kugel, die einerseits in einer kugeligen Ausnehmung der Welle und andererseits in einer axial verlaufenden Nut der Innenbohrung der Gleitbuchse vorgesehen ist. Der Laufring hat dort die gleiche axiale Erstreckung wie die Gleitbuchse und ist in axialer Richtung durch zwei Anlaufscheiben, die in radialer Richtung über die Gleitbuchse hinausragen, gesichert. Die Anlaufscheiben sind ihrerseits durch Seegerringe, die in umlaufenden Nuten der Welle gehalten sind, befestigt.

Bei dieser bekannten Friktionsrollenbahn bestehen die Gleitbuchsen aus ölgetränkter Sinterbronze.

Die Welle ist über Kugellager, die mit Seegerringen gehalten sind, in einem Rahmen gelagert und trägt an ihrem einen Ende ein Kegelzahnrad, welches auf einem eingedrehten Ansatz der Welle gehalten ist. Dieses Kegelzahnrad kämmt mit einem weiteren Kegelzahnrad, das an einer Antriebswelle befestigt ist.

Die bekannte Friktionsrollenbahn weist mehrere Nachteile auf:
Herstellung und Montage sind relativ aufwendig. So müssen an der Friktionswelle pro Friktionsrolle zwei Seegerringeinstiche gefertigt werden und später zwei Seegerringe montiert werden. Ebenso müssen in dem Träger zwei Seegerringeinstiche zur Fixierung des Wellenlagers gefertigt werden.

Ein weiterer und im Betrieb wichtigerer Nachteil der bekannten Friktionsrollenbahn liegt darin, daß die erzeugten Friktionskräfte nicht immer ausreichend sind. Hierdurch tritt vor allem das Problem des "Rückprellens" auf; wird beispielsweise eine Palette gegen einen Anschlag bewegt, so sind die in der Hauptbewegungsrichtung wirkenden Antriebs- bzw. Friktionskräfte nicht ausreichend, die Rückstoßkräfte durch den Aufprall zu kompensieren. Auch können mit der bekannten Friktionsrollenbahn praktisch keine Höhenunterschiede überwunden werden, da bei geneigter Bahn die Friktionskräfte teilweise nicht mehr ausreichen, so daß zumindest eine kontrollierte Förderung nicht möglich ist.

Schließlich ist es bei der bekannten Friktionsrollenbahn auch sehr problematisch, Kurven zu durchlaufen. Zum einen drehen sich die innen und die außen liegende Friktionsrolle gleich schnell, so daß der zu fördernde Gegenstand - je nach Fördergeschwindigkeit - relativ hart gegen die außen liegende Führungsschiene stößt. Die axial auf die Friktionsrolle wirkenden Kräfte belasten dann auch die Anlaufscheibe und den diese haltenden Seegerring, was bis zum Bruch führen kann, wobei dann der Laufring von der Gleitbuchse getrennt wird.

Ein weiteres Problem ist das Eindringen von Schmutz, Spänen, Schneidöl etc. in die Reibflächen zwischen Gleitbuchse und Laufring. Hierdurch wird der Reibbeiwert verändert,und zwar je nach Umweltbedingungen in Richtung zu einem "Festfressen" oder zu einer übermäßig guten Schmierung. Auf alle Fälle sind die beabsichtigten Reibparameter nicht mit Sicherheit gewährleistet.

Mit der Erfindung sollen diese Nachteile beseitigt werden.

Aufgabe der Erfindung ist es, die Friktionsrollenbahn der eingangs genannten Art dahingehend zu verbessern, daß bei einfacher Herstellung ein sicherer Betrieb unter den verschiedensten Bedingungen gewährleistet ist.

Diese Aufgabe wird erfindungsgemäß dadurch gelöst, daß die Gleitbuchse und der Laufring einander zugeordnete Axialflächen aufweisen, so daß bei in axialer Richtung auf den Laufring wirkenden Kräften zusätzliche Friktionskräfte in Drehrichtung des Laufringes wirksam werden. Mit anderen Worten werden zusätzliche Friktionskräfte aktiviert, wenn seitliche Kräfte, d. h. in Axialrichtung der Welle bzw. der Friktionsrolle wirkende Kräfte auf den Laufring wirken.

Nach einer Ausgestaltung der Erfindung weist die Gleitbuchse selbst bzw. ein mit dieser drehfest verbundener Deckel einen axialen Anschlag für den Laufring auf, wodurch zusätzliche Reibflächen gebildet werden, die bei Einwirkung von seitlichen Kräften aktiviert werden.

Nach einer Weiterbildung der Erfindung weist die Gleitbuchse an einer Seite einen radial hervorstehenden Bund auf, der einer in Axialrichtung weisenden Seitenfläche des Laufrings gegenüberliegt. Dieser radial hervorstehende Bund ist somit einstückig mit der Gleitbuchse, was die Montage erleichtert, die Stabilität erhöht und wegen des einheitlichen Werkstoffes definierte Reibverhältnisse schafft.

Nach einer weiteren Ausgestaltung der Erfindung ist seitlich der Friktionsrolle ein ringförmiger Deckel drehfest mit der Welle bzw. dem Wellenzapfen verbunden, wobei eine Endfläche des Deckels einer in Axialrichtung weisenden Seitenfläche des Laufrings gegenüberliegt. Dieser Deckel hat somit hinsichtlich der bei seitlich wirkenden Kräften auftretenden Friktionskräfte die gleiche Funktion wie der erwähnte radial hervorstehende Bund. Nach einer Variante der Erfindung liegt dieser Deckel an der dem Bund gegenüberliegenden Seite der Gleitbuchse. Es können aber auch an beiden Seiten der Gleitbuchse derartige Deckel vorhanden sein.

Nach einer Weiterbildung der Erfindung ist zwischen dem Bund bzw. der Endfläche des Deckels und der zugeordneten Seitenfläche des Laufrings ein Spalt vorhanden. Der Laufring hat somit in Axialrichtung ein gewisses Spiel, womit sichergestellt ist, daß die zusätzlich aktivierten Friktionskräfte nur dann auftreten, wenn eine seitliche Kraft auf den Laufring wirkt. Anderenfalls bestünde bei unterschiedlicher thermischer Ausdehnung von Gleitbuchse und Laufring die Gefahr des Festklemmens. Auch erleichtert dieser Spalt die Befestigung des Deckels an der Gleitbuchse.

Vorzugsweise besitzt der Deckel ein im wesentlichen U-förmiges Querschnittsprofil, wobei sein offenes Ende den Gleitring übergreift. Hierdurch wird eine definierte räumliche Lage zwischen Deckel und Gleitring geschaffen, im Gegensatz zur bekannten Anlaufscheibe auch die Stabilität erhöht und ermöglicht, daß der Deckel gemeinsam mit der Gleitbuchse drehfest mit der Welle verbunden werden kann. Auch wird hierdurch eine gewisse Abdichtung der Reibflächen gegen von außen eindringenden Schmutz geschaffen.

Bei dieser Anordnung ist es vorteilhaft, wenn der Gleitring mittels eines radial verlaufenden Stiftes an der Welle bzw.

dem Wellenzapfen befestigt ist. Dieser Stift verläuft durch den Mittelpunkt der Welle hindurch und hält zwei Seiten der Gleitbuchse.

Eine besonders einfache Befestigung ergibt sich dann, wenn zusätzlich der Deckel mittels desselben Stiftes befestigt ist. Somit hält ein und derselbe Stift sowohl den Deckel als auch den Gleitring drehfest an der Welle. Zusätzliche Sicherungen, wie beidseitige Seegerringe, sind nicht mehr nötig. Auch wird durch entsprechende Dimensionierung des Stiftes eine hohe Stabilität erhalten.

Gute und genau definierte Reibeigenschaften erhält man nach einer Weiterbildung der Erfindung dann, wenn die Gleitbuchse, der Laufring und der Deckel aus gesintertem Material sind. Bei der bekannten Friktionsrollenbahn war lediglich die Gleitbuchse aus Sintermaterial, während die übrigen Teile aus Stahl waren.

Das Sintermaterial für die Gleitbuchse besteht vorzugsweise aus ca. 96 % Eisen, 0,5 % bis 1,0 % Kohlenstoff und ca. 3 % weiteren Elementen. Das Sintermaterial des Deckels enthält vorzugsweise mindestens 98 % Eisen und maximal 2 % weiterer Elemente. Schließlich enthält das Sintermaterial des Laufrings ca. 90,2 % Eisen, 0,5 bis 2,0 % Kupfer, 1,0 bis 3,0 % Nickel, o,4 bis 0,8 % Molybdän, 0,4 bis 1 % Kohlenstoff und ca. 3 % weiterer Elemente.

Nach einem Ausführungsbeispiel der Erfindung hat das Sintermaterial der Gleitbuchse 12 folgende Zusammensetzung:

Eisen: 91 - 96 %; Kohlenstoff: 1,8 - 5 %; Mangan: 0,5 %; Zink: unter 0,1 %; Blei: unter 0,1 %; Magnesium: unter 0,1%; Kupfer: unter 0,1 %; Kobalt: unter 0,1 %; Nickel: unter 0,1 %. Das Sintermaterial des Laufrings hat bei diesem Ausführungsbeispiel folgende Zusammensetzung:

Eisen: 85 - 90 %; Kohlenstoff: über 10 %; Zink: unter 0,1 %; Blei: unter 0,1 %; Magnesium: unter 0,1 %; Kupfer: 0,4 %; Kobalt: unter 0,1 %; Nickel: 0,3 %; Schwefel: 0,5 %. Der Deckel hat hierbei die oben angegebenen Werte. Die Gleitbuchse 12, der Laufring 16 und der Deckel 14 sind jeweils mit Öl getränkt. Die Gleitbuchse weist ein Gefüge mit fast eutektoider Zusammensetzung auf; der Deckel besitzt dagegen ein ferritisches Gefüge mit nur geringen Perlitanteilen. Der Laufring 16 ist hierbei oberflächengehärtet und weist in seinen Randbereichen einen Martensitanteil auf. An den Oberflächen von Gleitbuchse und Laufring sind unterschiedliche Graphitverteilungen zu beobachten, während der Deckel eine verhältnismäßig gleichmäßige Verteilung der Graphitausscheidungen besitzt.

Allgemein enthält das Sintermaterial der Gleitbuchse, des Laufringes und des Deckels als überwiegenden Bestandteil Eisen. Besonders gut abgestimmte Reibverhältnisse erhält man, wenn die drei genannten Teile jeweils die oben angegebene Zusammensetzung haben, da die geringfügig unterschiedlichen Materialien der zusammenwirkenden Teile in diesem Falle in ihrer Kombination besonders günstig abgestimmt sind und hervorragende Reib-, Verschleiß- und Festigkeitseigenschaften haben.

Nach einer bevorzugten Weiterbildung der Erfindung besitzt der Laufring in Axialrichtung weisende Vorsprünge, die die Axialflächen bzw. den Spalt zwischen Laufring und Gleitbuchse bzw. zwischen Laufring und Deckel überdecken. Hierdurch wird eine noch bessere Abdichtung der wirksamen Reibflächen gegen eindringenden Schmtuz usw. erhalten.

Eine vorteilhafte Befestigungsart des Kegelrades auf der Welle bzw. dem Wellenzapfen liegt darin, daß das Kegelrad - ähnlich wie die Gleitbuchse und der Deckel - mittels eines radial verlaufenden Stiftes befestigt ist.

Eine günstige zusätzliche Abstützung des Kegelrades erhält man bei der hier vorliegenden Konstruktion, bei der die Welle bzw. der Wellenzapfen über ein Kugellager in einem Träger gehalten ist, dadurch, daß ein Innenring des Kugellagers unmittelbar mit dem Kegelrad in Berührung steht. Der Innenring des Kugellagers ist dabei in Axialrichtung länger als der Außenring.

Der Grundgedanke der Erfindung läßt sich auch in verschiedener Weise abwandeln. So kann eine geteilte Gleitbuchse verwendet werden, deren Einzelteile jeweils eine Stufe aufweisen, die dann den Bund bildet. Die Einzelteile des Laufringes können dann auch durch Aufschrumpfen drehfest mit der Welle verbunden sein und durch Seegerringer in Axialrichtung gehalten werden. Der Laufring hat dann an seiner Innenseite einen entsprechenden Vorsprung, der in die durch die Stufen gebildete Ausnehmung paßt. Nach einer anderen Variante können die beiden Teile der Gleitbuchse auch einen größeren Abstand voneinander haben, wobei der nach innen ragende Vorsprung des Laufringes in diesen Abstand paßt. Der Vorsprung ist dann nur seitlich, d. h. in Axialrichtung an den Teilen der Gleitbuchse geführt, in Radialrichtung dagegen nicht abgestützt.

Eine weitere Möglichkeit zur Erzeugung zusätzlicher Friktionskräfte bei Einwirken seitlicher Kräfte liegt darin, daß die Außenseite der Gleitbuchse und die Innenseite des Laufrings einander entsprechend konisch ausgeformt sind. Auch hierdurch wird in der Projektion eine Axialfläche gebildet. Die Neigung des Konus muß hierbei natürlich so groß sein, daß ein Festfressen verhindert wird. Die Fixierung der Gleitbuchse an der Welle und des Laufringes in einer Richtung kann dann ebenfalls durch den Deckel erfolgen. Der Konus kann sich über die gesamte gemeinsame Berührungsfläche zwischen Laufring und Gleitbuchse erstrecken oder auch nur über einen Teil derselben. Auch bei der Variante mit geteilter Gleitbuchse kann das Prinzip des Konus verwendet werden, wobei beide Gleitbuchsenteile dann jeweils einen Konus aufweisen.

Im folgenden wird die Erfindung anhand von Ausführungsbeispielen im Zusammenhang mit der Zeichnung ausführlicher erläutert.

Es zeigt:

Fig. 1     eine Schnittansicht der Friktionsrollenbahn, wobei die linke Hälfte der Figur die Variante mit einem Wellenzapfen, die rechte Hälfte der Figur die Variante mit einer durchgehenden Welle zeigt;

Fig. 2     einen Schnitt ähnlich Fig. 1 eines zweiten Ausführungsbeispiels der Friktionsrollenbahn.

Gleiche Bezugszeichen in den Figuren bezeichnen gleiche Teile.

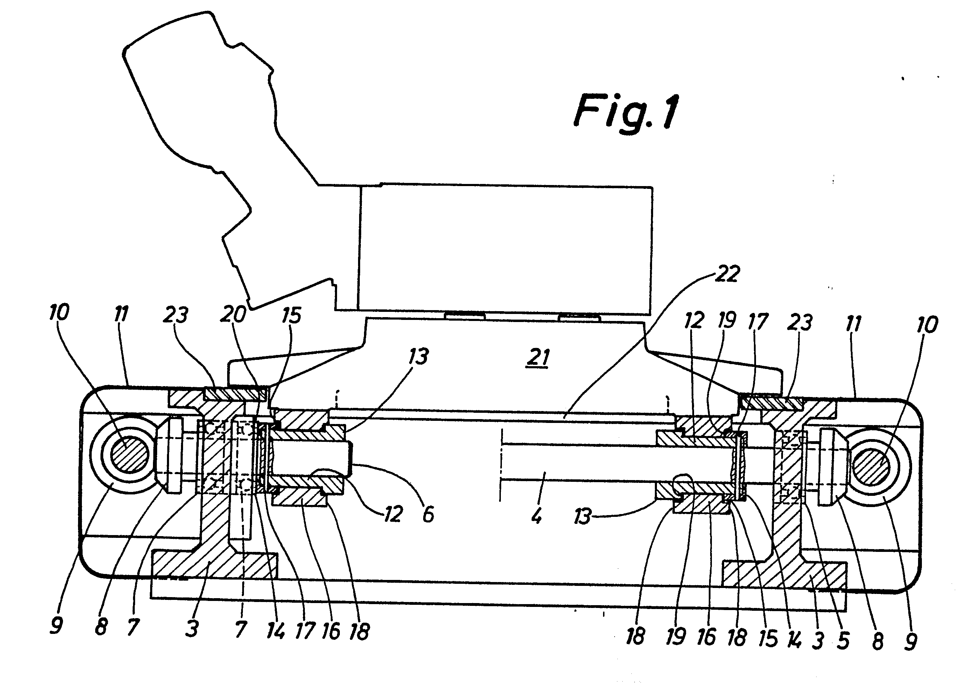

Die Friktionsrollenbahn der Fig. 1 ist auf einer Plattform 1 angeordnet, auf der I-förmige Träger 3 befestigt sind. In diesen Trägern 3 ist - je nach Ausführungsform - eine durchgehende Welle 4 in Kuggellagern 5 gelagert (rechte Hälfte der Fig. 1) oder ein Wellenzapfen 6 in Kugellagern 7 gelagert. Jede Welle 4 ragt durch den Träger 3 hindurch und trägt an ihrem einen Ende, das zur Außenseite des Trägers 3 hin weist, ein Kegelrad 8, das drehfest mit der Welle 4 verbunden ist. Dieses Kegelrad 8 kämmt mit einem weiteren Kegelrad 9, das an einer Antriebswelle 10 befestigt ist und das in einem Gehäuse 11 gelagert ist. Im Falle der durchgehenden Welle 4 ist das andere Ende dieser Welle 4 in Kugellagern des anderen Trägers gelagert, trägt dort jedoch kein Kegelzahnrad.

Bei der Ausführungsform mit dem Wellenzapfen 6 dagegen weist jeder Wellenzapfen 6 auf beiden Seiten der Friktionsrollenbahn ein entsprechendes Kegelzahnrad 8 auf, das mit einem zugeordneten Kegelzahnrad 9 auf der Antriebswelle 10 kämmt. Auch hier befindet sich das Kegelzahnrad auf der Außenseite des Trägers 3.

Unabhängig von der Variante mit durchgehender Welle 4 oder mit Wellenzapfen 6 tragen die Welle 4 oder der Wellenzapfen 6 an der nach innen weisenden Seite der Träger 3 jeweils relativ nahe an dem Träger 3 eine Friktionsrollenkonstruktion. Diese besteht aus einer drehfest mit der Welle 4 bzw. dem Wellenzapfen 6 verbundenen Gleitbuchse 12, die an ihrem einen Endbereich einen radial nach außen hervorspringenden Bund 13 aufweist. Auf dem dem Bund 13 gegenüberliegenden Ende der Gleitbuchse 12 ist ein Deckel 14 angeordnet, der ein im wesentlichen U-förmiges Querschnittsprofil aufweist. Das offene Ende 15 des Deckels 14 weist hierbei in Richtung auf die Gleitbuchse 12 und übergreift diese. Die Gleitbuchse 12 und der Deckel 14 sind über einen gemeinsamen Stift 17, der in eine durchgehende Bohrung der Welle 4 eingesetzt ist, drehfest mit letzterer verbunden.

Die Gleitbuchse 12 trägt einen Laufring 16, der gegenüber der Gleitbuchse 12 drehbar ist und durch Friktionskräfte bei Drehung der Welle 4 und der Gleitbuchse 12 mitgenommen wird. Der Laufring 16 ist in axialer Richtung auf der einen Seite durch den Bund 13 und auf der anderen Seite durch das freie Ende 15 des Deckels 14 gehalten. Die einander gegenüberliegenden in axialer Richtung weisenden Flächen des Bundes 13 bzw. des Endes 15 des Deckels 14 und des Laufringes 16 bilden hierbei zusätzliche Friktionsflächen, die bei Einwirkung von seitlichen Kräften auf den Laufring 16 zusätzliche Friktionskräfte in Drehrichtung aktivieren.

Der Laufring 16 weist beidseitig einen ringförmigen, in Axialrichtung weisenden Vorsprung 18 auf, der Teile der radial nach außen gerichteten Fläche des Bundes 13 bzw. des Deckels 14 überdeckt. Diese Vorsprünge 18 überdecken somit auch die Spalte 19 zwischen den in axialer Richtung weisenden Friktionsflächen, wodurch das Eindringen von Staub, Schmutz etc. in die Reibflächen verhindert wird. Die nach innen weisenden Flächen der Vorsprünge 18 können mit den radial nach außen weisenden Flächen am Bund 13 bzw. am Deckel 14 in Berührung stehen, so daß sie zur Erzeugung der Friktionskräfte beitragen und eine bessere Abdichtung bewirken.

Bei dem links in Fig. 1 gezeigten Wellenzapfen 6 kann zwischen der nach außen weisenden Fläche des Deckels 14 und dem benachbarten Kugellager 7 eine Distanzhülse bzw. -scheibe 20 auf dem Wellenzapfen 6 angeordnet sein, wodurch im Zusammenwirken mit dem Kegelzahnrad 8 axiale Kräfte abgefangen werden können. Hierdurch werden die Kugellager 7 entlastet.

Die Gleitbuchse 12, der Deckel 14 und der Laufring 16 sind jeweils aus gesintertem Material hergestellt, welches als überwiegenden Bestandteil Eisen enthält. Eine bevorzugte Sintermischung für die Gleitbuchse 12 besteht aus einem Pulvermaterial, das minimal 96 % Eisen, 0,5 bis 1,0 % Kohlenstoff und maximal 3 % weiterer Elemente enthält. Der Deckel 14 besteht dann vorzugsweise aus Sintermaterial, das minimal 98 % Eisen und maximal 2 % weiterer Elemente enthält. Schließlich besteht der Laufring 16 aus Sintermaterial, das minimal 90,2 % Eisen, 0,5 bis 2,0 % Kupfer, 1,0 bis 3,0 % Nickel, 0,4 bis 0,8 % Molybdän, 0,4 bis 1,0 % Kohlenstoff und maximal 3 % weiterer Elemente enthält. Diese Kombination von Sintermaterialien hat sich als besonders günstig erwie- Eine weitere günstige Kobmination der Werkstoffe ist in der Beschreibungseinleitung erwähnt.

Die dargestellte Friktionsrollenbahn dient vorzugsweise zum Transport von Teilen bei der Automobilherstellung, wie z. B. Zylinderköpfen, die auf Paletten 21 gehalten sind. Diese Paletten liegen auf den Laufringen 16 auf, welche zu einem Teil durch eine Abdeckplatte 22 hervorragen. Die Abdeckplatte 22 ist zwischen den Trägern 3 befestigt. Die Paletten 21 werden durch Führungsschienen 23 zentriert, welche an den Oberseiten der I-förmigen Träger 3 angebracht sind und zur Innenseite der Friktionsrollenbahn hin weisen. Die Laufringe 16 sind normalerweise auf ihren zugeordneten Gleitbuchsen 12 frei drehbar. Unter Einfluß des Gewichtes einer mit einem Teil belasteten Palette 21 werden ausreichende Friktionskräfte zwischen den gesinterten Komponenten der Friktionsrollenkonstruktion erzeugt, die dann für eine Bewegung der Palette 21 längs der Friktionsrollenbahn sorgen. Wenn die Palette 21 an einer Bearbeitungsstation gegen einen Anschlag fährt, so drehen sich die Gleitbuchse 12 und der Deckel 14 der entsprechenden Welle 4 weiter und unabhängig von der Gleitbuchse 12, die dann stehenbleibt. Beim Auftreffen auf einen Anschlag wird jedoch noch eine ausreichende Reibungskraft zwischen der gesinterten Gleitbuchse und dem gesinterten Laufring erzeugt, die ein Rückprellen der Palette verhindert, so daß diese an der gewünschten Position stehenbleibt. Die Reibkräfte sind auch so groß, daß die Friktionsrollenbahn bis zu 5 ° aufwärts oder abwärts geneigt aufgestellt werden kann, ohne daß ein gesicherter Antrieb verlorengeht.

Werden aus irgendwelchen Gründen, beispielsweise bei einer Kurve der Friktionsrollenbahn, seitliche Kräfte, d. h. in Axialrichtung der Welle 4 bzw. des Wellenzapfens 6 auf den Laufring 16 ausgeübt, so werden zusätzliche Friktionskräfte aktiviert.

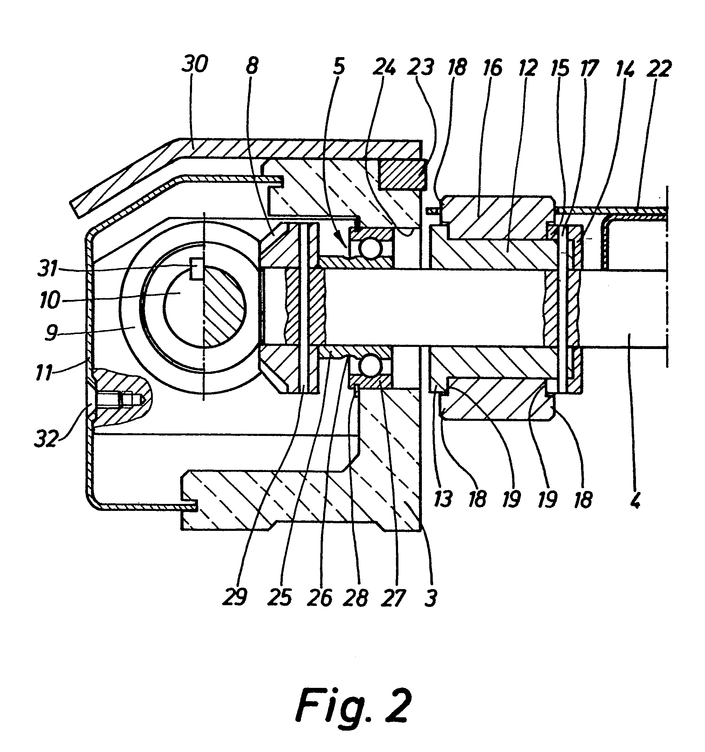

Das Ausführungsbeispiel der Fig. 2 entspricht im wesentlichen der linken Hälfte der Fig. 1, zeigt jedoch gewisse Modifikationen. So ist zum einen der Bund 13 der Gleitbuchse 12 nahe dem Träger 3 angeordnet, während der Deckel 14 an der dem Träger 3 abgewandten Seite liegt. Auch ist der Träger 3 dort nicht als Doppel-T-Träger ausgebildet, sondern hat eher das Profil eines liegenden U. Das Kugellager 5 ist eine im Handel erhältliche Konstruktion mit verlängertem Innenring 25. Dieser Innenring 25 liegt mit seinem einen Ende an dem Kegelzahnrad 8 an, wodurch das Lager gegenüber Bewegungen nach links in Fig. 2 abgestützt ist. Dementsprechend wird nur eine zusätzliche Arretierung des Kugellagers 5 benötigt, die hier in Form eines Seegerringes 28 vorgesehen ist. Dieser Ring 28 ist in einem Seegerringeinstich an der Außenseite des Außenringes 27 befestigt und liegt an der Kante der Lagerbohrung 24 an. Zusätzlich weist das Kugellager 5 an dem Innenring 25 eine umlaufende Ausnehmung 26 auf. Das Kegelzahnrad 9 ist ähnlich wie die Gleitbuchse 12 und der Deckel 14 mit einem durchgehenden Stift 29 an der Welle 4 befestigt, wobei die entsprechende Bohrung 24 vollständig durch die Welle 4 hindurchgeht, und zwar durch deren Mittelpunkt. Entsprechend weist das Kegelzahnrad 8 eine durchgehende Bohrung 24 oder besser gesagt zwei einander diametral gegenüberliegende Bohrungen 24 auf, welche den Stift 29 aufnehmen.

Das mit dem Kegelzahnrad 8 kämmende Kegelzahnrad 9 ist - wie bei Fig. 1 - auf der Antriebswelle 10 befestigt, was hier mittels einer Nut- und Federverbindung 31 erfolgt. Das "Gehäuse" 11, welches die in Längsrichtung der Friktionsrollenbahn verlaufende Antriebswelle 10 und die zugeordneten Kegelzahnräder aufnimmt, ist im wesentlichen U-förmig ausgebildet und in entsprechenden Nuten des Trägers 3 gehalten sowie durch eine Schraube 32 gesichert. Die Oberseite des Trägers 3 ist durch eine abgewinkelte Abdeckplatte 30 geschützt.

Die übrigen Teile der Ausführungsform der Fig. 2 entsprechen denen der Fig. 1, so daß eine weitere Erläuterung nicht erforderlich ist.

Die Montage der erfindungsgemäßen Friktionsrollenbahn ist sehr einfach, da die Gleitbuchse 12 nicht mehr aufgeschrumpft werden muß, sondern lediglich die Einzelteile der Friktionsrollenkonstruktion zusammengeschoben werden müssen und dann der Stift 17 einzusetzen ist.

Weitere Varianten des Grundgedankens sind in der Beschreibungseinleitung erwähnt, in den Figuren jedoch nicht dargestellt.

In die gesinterten Teile wie Gleitbuchse, Deckel und Laufring ist - wie bekannt- Öl eingelagert, wodurch eine Dauerschmierung erzielt wird. Durch den Bund 13, den Deckel 14 und den ringförmigen Vorsprung 18 wird eine labyrinthartige Abdichtung erzielt, so daß kein Öl nach außen austreten kann.

Die gesinterten Teile sind billiger in der Herstellung, haben bessere Laufeigenschaften und längere Haltbarkeit. Der Grund für diese überraschenden Vorteile liegt darin, daß Flächen aneinandergleiten, die zwar verhältnismäßig porige Oberfläche haben, zwischen denen aber ein ständiger Gleitfilm durch eingelagerte Schmiermittel besteht, der einer Abnutzung entgegenwirkt und die günstigen Laufeigenschaften bewirkt. Durch den einfachen Aufbau der Lagerung und Befestigung des Kegelrades sowie der Friktionsrollenkonstruktion wurde eine enorme Verbilligung sowohl der Herstellung der mechanischen Teile als auch der Montage erreicht.

Sämtliche in den Patentansprüchen, der Beschreibung und der Zeichnung dargestellten technischen Einzelheiten können sowohl für sich als auch in beliebiger Kombination mitein- ander erfindungswesentlich sein.

Meissner & Bolte
Patentanwälte

Meissner & Bolte, Hollerallee 73, D-2800 Bremen 1

Hans Meissner · Dipl.-Ing. (bis 1980)*
Erich Bolte · Dipl.-Ing.*
Ralf M. Kern · Dipl.-Ing.**
Dr. Eugen Popp · Dipl.-Ing., Dipl.-Wirtsch.-Ing.**
Wolf E. Sajda · Dipl.-Phys.**
Dr. Tam v. Bülow · Dipl.-Ing., Dipl.-Wirtsch.-Ing.**

BÜRO/OFFICE BREMEN
Hollerallee 73
D-2800 Bremen 1

Telefon: (04 21) 34 20 19
Telegramme: PATMEIS BREMEN
Telex: 246 157 meibo d

Anmelder:

Johann A. Krause UK Limited
Kings Grove
Boyn Valley Road
Maidenhead Berks
England

| Ihr Zeichen<br>Your ref. | Ihr Schreiben vom<br>Your letter of | Unser Zeichen<br>Our ref. | Datum<br>Date |
|---|---|---|---|
| | | KRS-27-EP | 25. April 1983 /9118 |

Friktionsrollenbahn

Patentansprüche

1. Friktionsrollenbahn mit einer Mehrzahl von jeweils auf Wellen (4) oder Wellenzapfen (6) gelagerten Friktionsrollen, die jeweils aus einer drehfest auf der Welle (4) bzw. dem Wellenzapfen (6) gelagerten Gleitbuchse (12) und einem gleitend auf der Gleitbuchse (12) gelagerten Laufring (16) bestehen,
d a d u r c h   g e k e n n z e i c h n e t ,
daß die Gleitbuchse (12) und der Laufring (16) einander zugeordnete Axialflächen aufweisen, so daß bei in axialer Richtung auf den Laufring (16) wirkenden Kräften zusätzliche Friktionskräfte in Drehrichtung des Laufringes ( 16) wirksam werden.

2.      Friktionsrollenbahn nach Anspruch 1, dadurch gekennzeichnet, daß die Gleitbuchse (12) selbst bzw. ein mit dieser drehfest verbundener Deckel (14) einen axialen Anschlag für den Laufring (16) aufweisen.

3.      Friktionsrollenbahn nach Anspruch 1 oder 2, dadurch gekennzeichnet, daß die Gleitbuchse (12) an einer Seite einen radial hervorstehenden Bund (13) aufweist, der einer in Axialrichtung weisenden Seitenfläche des Laufrings (16) gegenüberliegt.

4.      Friktionsrollenbahn nach einem oder mehreren der Ansprüche 1 bis 3, dadurch gekennzeichnet, daß seitlich der Friktionsrolle ein ringförmiger Deckel (14) drehfest mit der Welle (4) bzw. dem Wellenzapfen (6) verbunden ist und daß eine Endfläche (15) des Deckels (14) einer in Axialrichtung weisenden Seitenfläche des Laufrings (16) gegenüberliegt.

5.      Friktionsrollenbahn nach den Ansprüchen 3 oder 4, dadurch gekennzeichnet, daß zwischen dem Bund (13) bzw. der Endfläche (15) des Deckels (14) und der zugeordneten Seitenfläche des Laufrings (16) ein Spalt (19) vorhanden ist.

6.      Friktionsrollenbahn nach Anspruch 4 oder 5, dadurch gekennzeichnet, daß der Deckel (14) ein im wesentlichen U-förmiges Querschnittsprofil aufweist, wobei sein offenes Ende den Gleitring (12) übergreift.

7.      Friktionsrollenbahn nach einem oder mehreren der Ansprüche 1 bis 5, dadurch gekennzeichnet, daß der Gleitring (12) mittels eines radial verlaufenden Stiftes (17) an der Welle (4) bzw. dem Wellenzapfen (6) befestigt ist.

8. Friktionsrollenbahn nach Anspruch 7, dadurch gekennzeichnet, daß zusätzlich der Deckel (14) mittels des radial verlaufenden Stiftes (17) befestigt ist.

9. Friktionsrollenbahn nach einem oder mehreren der Ansprüche 1 bis 8, dadurch gekennzeichnet, daß die Gleitbuchse (12), der Laufring (16) und der Deckel (14) aus gesintertem Material sind.

10. Friktionsrollenbahn nach Anspruch 9, dadurch gekennzeichnet, daß das gesinterte Material der Gleitbuchse (12) · ca. 96 % Eisen, ca. 0,5 bis 1,0 % Kohlenstoff und ca. 3 % weitere Elemente enthält.

11. Friktionsrollenbahn nach Anspruch 9 oder 10, dadurch gekennzeichnet, daß das gesinterte Material des Deckels (14) mindestens 98 % Eisen und maximal 2 % weitere Elemente enthält.

12. Friktionsrollenbahn nach einem oder mehreren der Ansprüche 9 bis 11, dadurch gekennzeichnet, daß das gesinterte Material des Laufrings (16) ca. 90,2 % Eisen, ca. 0,5 bis 2,0 % Kupfer, ca. 1,0 bis 3,0 % Nickel, ca. 0,4 bis 0,8 % Molybdän, ca. 0,4 bis 1,0 % Kohlenstoff und ca. 3 % weitere Elemente enthält.

13. Friktionsrollenbahn nach einem oder mehreren der Ansprüche 1 bis 12, wobei an einem Ende der Welle bzw. des Wellenzapfens ein Kegelrad (8) befestigt ist, dadurch gekennzeichnet, daß das Kegelrad (8) mittels eines radial verlaufenden Stiftes (29) befestigt ist.

14. Friktionsrollenbahn nach Anspruch 13, wobei die Welle bzw. der Wellenzapfen über ein Kugellager (5) in einem Träger (3) gehalten ist, dadurch gekennzeichnet, daß ein Innenring (25) des Kugellagers (5) unmittelbar mit dem Kegelrad (8) in Berührung ist.

Meissner & Bolte
Patentanwälte

*Fig.1*

21

0103672

2/2

30   8        5   24  23  18  16  12  15  17  14  22

31
10
9
11
32

29  25  26  28  27  3        13  18  19  19  18      4

*Fig. 2*

0103672

Nummer der Anmeldung

## Europäisches Patentamt

## EUROPÄISCHER RECHERCHENBERICHT

| EINSCHLÄGIGE DOKUMENTE | | | EP 83104246.0 |
|---|---|---|---|
| **Kategorie** | Kennzeichnung des Dokuments mit Angabe. soweit erforderlich, der maßgeblichen Teile | Betrifft Anspruch | **KLASSIFIKATION DER ANMELDUNG (Int. Cl. ³)** |
| D,A | <u>DE - A1 - 3 017 942</u> (KRAUSE MASCHINENFABRIK) <br> -- | | B 65 G 13/071 |
| A | <u>DE - A1 - 2 834 042</u> (MAYFRAN) <br> -- | | |
| A | <u>DE - A1 - 3 027 869</u> (BLEICHERI) <br> ---- | | |

| | | | **RECHERCHIERTE SACHGEBIETE (Int. Cl. ³)** |
|---|---|---|---|
| | | | B 65 G 13/00 <br> B 65 G 39/00 <br> B 65 H 17/00 |

Der vorliegende Recherchenbericht wurde für alle Patentansprüche erstellt.

| Recherchenort | Abschlußdatum der Recherche | Prüfer |
|---|---|---|
| WIEN | 30-12-1983 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82